# EUROPÄISCHE PATENTSCHRIFT

(11) **EP 0 519 258 B1**
(45) Veröffentlichungstag und Bekanntmachung des Hinweises auf die Patenterteilung: **06.04.1994**
(21) Anmeldenummer: 92109244.1
(22) Anmeldetag: 02.06.1992
(51) Int. Cl.: C02F 3/12, C02F 3/10

(54) **Verfahren und Einrichtung zur kontinuierlichen Abtrennung, Reinigung und Rückförderung von körnigem, schwimmfähigem Trägermaterial aus Reaktoren zur biologischen Wasserbehandlung**
Method and device for the continuous separation, purification and return of granular, floatable base material from reactors for biological water treatment
Procédé et dispositif pour la séparation, le nettoyage et le renvoi ou recyclage en continu de matériau porteur, particulaire flottant, à partir des réacteurs à destination du traitement d'eau biologique

(30) Priorität: 15.06.1991 DE 4119811
(43) Veröffentlichungstag der Anmeldung: 23.12.1992
(73) Patentinhaber: Haldenwang, Lutz, Dr., D-01445 Radebeul (DE); Böhler, Ernst, Dr., D-01159 Dresden (DE); Fabris, Benno, D-01187 Dresden (DE)
(72) Erfinder: Haldenwang, Lutz, Dr., D-01445 Radebeul (DE); Böhler, Ernst, Dr., D-01159 Dresden (DE); Fabris, Benno, D-01187 Dresden (DE)
(74) Vertreter: Hofmann, Klaus, Dipl.-Ing. Patentanwalt

(56) Entgegenhaltungen:
- EP-A- 0 238 902
- EP-A- 0 389 958
- DD-A- 267 026

## Beschreibung

Die Erfindung bezieht sich auf die Abtrennung, Reinigung und Rückförderung von aus Reaktoren zur biologischen Wasserbehandlung, insbesondere Wirbelschichtreaktoren, ausgetragenem Trägermaterial.

In den letzten Jahren werden zur Erhöhung der Konzentration an aktiver Biomasse und damit der Raumleistung in Reaktoren zur biologischen Wasserbehandlung zunehmend spezielle Trägermaterialien eingesetzt. DD 267 026 beschreibt einen anaeroben, vertikalen Rohrreaktor zur Nitratentfernung bei der Trinkwasseraufbereitung. Als Trägermaterial kommt gesintertes Schaumpolystyren nach DD 261 921 zum Einsatz. Bei dem im Abwärtsstrom betriebenen Wirbelschichtreaktor wird ein Teil des zu stark mit Biomasse bewachsenem Trägermaterials kontinuierlich mit dem Wasserstrom ausgetragen.

In der Literatur beschriebene Rückhalteeinrichtungen, wie Siebe, Gitter oder Tauchwände erwiesen sich als ungeeignet, da diese wartungsaufwendig sind und die hydraulischen Bedingungen der Reaktoren negativ beeinflussen. Naheliegend wäre z.B. die Nachschaltung einer separaten Trenneinrichtung, bei der das Material durch Aufschwimmen vom behandelten Wasser abgetrennt wird. Die nahe Dichte der bewachsenen Trägermaterialien an der des Wassers führt aber nicht zu gesicherten Ergebnissen. Den bekannten oder naheliegenden technischen Lösungen haftet stets der Nachteil eines unerwünscht hohen Trägermaterialverlustes an, wodurch das biologische Gleichgewicht im Reaktor gestört und die kontinuierliche Eliminierungsleistung ungünstig beeinflußt werden.

Ziel der Erfindung ist die nahezu vollständige Rückhaltung von aus Reaktoren zur Wasseraufbereitung, insbesondere aus Wirbelschichtreaktoren, ausgetragenem Trägermaterial in einer den Reaktoren nachgeschalteten Trenneinheit sowie deren Reinigung von bewachsener Biomasse und Rückförderung in den Reaktor.

Die Erfindung wird durch das im Patentanspruch 1 beschriebene Verfahren sowie durch die im Patentanspruch 3 beschriebene Einrichtung realisiert.

Erfindungsgemäß wird der aus dem Reaktor austretende Wasserstrom mit dem mitgeführten Trägermaterial gegen eine in einem Gasraum einer dem Reaktor nachgeschalteten Trenneinheit enthaltenen Prallplatte geleitet. Durch die mechanische Beanspruchung beim Aufprall auf die Prallplatte wird auf dem Trägermaterial anhaftende Biomasse teilweise abgelöst. Dadurch verringert sich die Dichte des Trägermaterials. Der sich vergrößernde Dichteunterschied zwischen Material und Wasser bewirkt nach dem Rückfall auf die unter dem Gasraum befindliche Wasseroberfläche ein Aufschwimmen des Trägermaterials im vertikal nach unten durchströmten Absetzraum. Unterhalb des Wasserspiegels wird das aufschwimmende Trägermaterial aus der Trenneinheit seitlich mittels eines Ejektors abgezogen und in den Reaktor zurückgefördert.

Bei geschlossener Ausführung der Trenneinheit wird das Gasraumvolumen mittels Be- und Entlüftung konstant gehalten.

Die mechanische Beanspruchung in der Trenneinheit wird durch die Anordnung von Leitringen oder Strahlaufreißern auf der Prallplatte beziehungsweise durch mehrere, gegebenfalls zueinander angeordnete Zulaufrohre oder mehrere Prallplatten noch vergrößert.

Die Druckentspannung am Ringspalt, die mehrfachen Richtungsänderungen bei relativ hohen Fließgeschwindigkeiten, das mehrfache Auftreffen auf Hindernisse und der freie Fall auf bereits aufgeschwommenes Trägermaterial bewirken eine gute Ablösung der Biomasse vom Trägermaterial und dadurch eine bessere Trennung von Wasser und Trägermaterial.

Vorteilhafterweise wird die Prallplatte vom Deckel der Trenneinheit gebildet.

Durch die in den Ansprüchen 5 und 6 beschriebene Erweiterung des Querschnittes der zylindrischen Trenneinheit bis zum 1,5-fachen der Querschnittsfläche des Reaktors wird die Fließgeschwindigkeit in Richtung Ablauf der Trenneinheit verringert und somit die Abtrennung von Trägermaterial und Biomasse enthaltendem Wasser begünstigt.

Bei der Entnahme des aufgeschwommenen Trägermaterials über Saugstutzen und Ejektor mit Treibwasseranschluß erfolgt eine weitere mechanische Beanspruchung des Materials. Es gelangt somit Trägermaterial mit nahezu der Ausgangsdichte in den Reaktor zurück.

Die Erfindung wird nachfolgend an einem Beispiel und einer Abbildung näher erläutert.

In einem vertikal abwärts durchströmten, rohrförmigen Wirbelschichtreaktor zur Nitrateliminierung mit einer Querschnittsfläche von 0,28 m² wird ein schwimmendes, körniges Trägermaterial mit einer Rohdichte von 0,3 bis 0,6 g/cm³ in der Körnung 2 bis 6 mm eingesetzt. Bei der heterotrophen Denitrifikation tritt ein Bewuchs des Trägermaterials und somit eine Dichteerhöhung ein. Durch den Volumenzuwachs und die ansteigende Dichte erhöht sich die Expansion der Wirbelschicht. Eine vollständige Selbstreinigung des Materials durch Turbulenzen und Scherkräfte im Wirbelbett tritt nicht ein. Damit wird bei kontinuierlichem Betrieb ständig ein Teil des Materials, vor allem die am dichtesten bewachsenen Teilchen aus dem unteren Bereich des Reaktors, ausgetragen. Die nachgeschaltete Einrichtung dient der Abtrennung, Reinigung und Rückförderung des Trägermaterials.

Der Wasserstrom mit dem ausgetragenem Material gelangt über ein Zulaufrohr 2 in die zylindrische Trenneinheit 1. Durch den Ringspalt 3 zwischen dem nach oben gerichteten Zulaufrohr 2 und dem als Prallplatte 4 ausgebildeten Deckel der Trenneinheit 1 wird der Wasserstrahl um 90° umgelenkt. Das horizontal abgelenkte Wasser-Trägermaterial-Gemisch wird durch auf der Prallplatte 4 versetzt angebrachte Strahlaufreißer 16 weiter mechanisch beansprucht und am außerhalb der Strahlaufreißer 16 und ebenfalls auf der Prallplatte 4 befindlichem Leitring 5 nochmals um 90° umgelenkt. Bei einer Anordnung von mehreren Zulaufrohren 2 können die Gemischstrahlen auch gegeneinander gerichtet sein. Wasser und Trägerteilchen fallen durch den Gasraum 7 auf bereits teilgereinigtes, aufgeschwommenes Trägermaterial 8, welches dadurch ständig verwirbelt wird.

Zur Einhaltung eines konstanten Wasserspiegels 6 und damit eines konstanten Gasraumes 7 dienen eine Druckluftzuführung 15 und eine Entlüftung 14.

Kurz unterhalb des Wasserspiegels 6 befindet sich ein Saugstutzen 9 eines Ejektors 10, durch den ein Gemisch von gereinigtem Trägermaterial, Wasser und abgeriebene Biomasse über die Förderleitung 12 in den Reaktor zurückgefördert wird. Die gleichmäßige Rückförderung wird durch einen Treibwasseranschluß 11 unterstützt. Bedarfsweise erfolgt vor der Rückführung in den Reaktor eine Trennung von Schlammwasser und Trägermaterial.

Durch die kegelstumpfförmige Erweiterung des Querschnittes der Trenneinheit 1 unterhalb des Saugstutzens 9 auf etwa 0,33 m² wird die Abstromgeschwindigkeit unterhalb der im Reaktor gesenkt und dadurch eine zusätzliche Sicherheit zur Verhinderung des Materialaustrages geschaffen.

Im Bodenbereich der Trenneinheit 1 befindet sich der Ablauf 13 für trägermaterialfreies Wasser.

Mit Hilfe der Erfindung wird die Voraussetzung für einen kontinuierlichen, wartungsarmen Betrieb des Reaktors mit nahezu konstanten Reaktionsbedingungen und gleichmäßig hohen Eliminierungsleistungen bei minimalem Aufwand für die Abtrennung, Reinigung und Rückförderung geschaffen. Es treten praktisch keine Trägermaterialverluste ein. Eine der biologischen Denitrifikation im Wirbelschichtreaktor folgende Nachbehandlung, z.B. eine weitere Filtration, wird durch die Erfindung weiter entlastet.

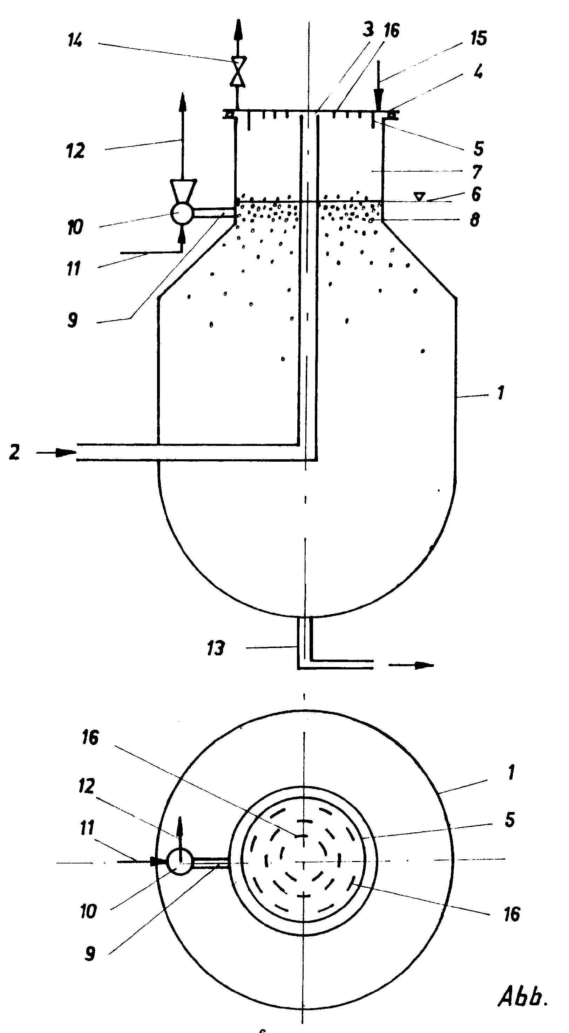

## Patentansprüche

1. Verfahren zur kontinuierlichen Abtrennung, Reinigung und Rückförderung von körnigem, schwimmfähigem Trägermaterial aus Reaktoren zur biologischen Wasserbehandlung,
dadurch gekennzeichnet,
- daß der aus dem Reaktor austretende Wasserstrom mit dem mitgeführten Trägermaterial (8) gegen eine in einem Gasraum (7) einer Trenneinheit (1) enthaltene Prallplatte (4) geleitet wird,
- und das in der Trenneinheit (1) aufschwimmende Trägermaterial (8) unterhalb des Wasserspiegels (6) in der Trenneinheit (1) mittels eines Ejektors (10) abgezogen und in den Reaktor zurückgefördert wird.

2. Verfahren nach Anspruch 1,
dadurch gekennzeichnet,
- daß die Trenneinheit (1) unter Druck betrieben
- und das Gasraumvolumen mittels Be- und Entlüftung konstant gehalten wird.

3. Einrichtung zur kontinuierlichen Abtrennung, Reinigung und Rückförderung von körnigem, schwimmfähigem Trägermaterial aus Reaktoren zur biologischen Wasserbehandlung,
dadurch gekennzeichnet,
- daß die Zuführung des Reaktorablaufs in eine zylindrische Trenneinheit (1) mündet und
- durch einen Ringspalt (3) getrennt
- bis unter eine in der Trenneinheit (1) angeordnete Prallplatte (4) reicht,
- daß unterhalb der Prallplatte (4) ein Saugstutzen (9) in einen Ejektor (10) mit Treibwasseranschluß (11) mündet,
- aus dem eine Förderleitung (12) zurück in den Reaktor führt
- und daß sich im Bodenbereich der Trenneinheit ein Ablauf (13) befindet.

4. Einrichtung nach Anspruch 3,
dadurch gekennzeichnet,
- daß innerhalb der Trenneinheit (1) mehrere Zulaufrohre (2) und mehrere Prallplatten (4) angeordnet sind.

5. Einrichtung nach den Ansprüchen 3 und 4,
dadurch gekennzeichnet,
- daß der Querschnitt der zylindrischen Trenneinheit (1) unterhalb des Saugstutzens (9) kegelstumpfförmig erweitert ist.

6. Einrichtung nach Anspruch 5,
dadurch gekennzeichnet,
- daß die Querschnittsfläche am unteren Ende des Kegelstumpfes maximal das 1,5-fache der Querschnittsfläche des Reaktors beträgt.

7. Einrichtung nach den Ansprüchen 3 bis 6,
dadurch gekennzeichnet,
- daß die Prallplatte (4) einen Leitring (5) besitzt.

8. Einrichtung nach den Ansprüchen 3 bis 7,
dadurch gekennzeichnet,
- daß die Prallplatte (4) mit gegeneinander versetzt angeordneten Strahlaufreißern (16) versehen ist.

9. Einrichtung nach den Ansprüchen 3 bis 8,
dadurch gekennzeichnet,
- daß die Trenneinheit (1) geschlossen ausgebildet ist und eine Druckluftzuführung (15) und eine Entlüftung (14) enthält.

10. Einrichtung nach den Ansprüchen 3 bis 9,
dadurch gekennzeichnet,
- daß der Deckel der Trenneinheit (1) die Prallplatte (4) bildet.

## Claims

1. Method for the continuous separation, purification and return of granular, floatable base material from reactors for biological water treatment, characterised in that the water stream emerging from the reactor with the base material (8) carried along is directed towards a baffle plate (4) contained in a gas chamber (7) of a separation unit (1), and the base material (8) floating in the separation unit (1) is drawn off below the water level (6) in the separation unit (1) by means of an ejector (10) and returned to the reactor.

2. Method according to Claim 1, characterised in that the separation unit (1) is operated under pressure and the gas chamber volume is kept constant by means of aeration and deaeration.

3. Device for the continuous separation, purification and return of granular, floatable base material from reactors for biological water treatment, characterised in that the supply of the reactor discharge opens into a cylindrical separation unit (1) and, separated by an annular gap (3), extends to below a baffle plate (4) located in the separation unit (1), that below the baffle plate (4) a suction connection (9) opens into an ejector (10) with a propelling water connection (11), from which a feed pipe (12) leads back into the reactor and that a discharge (13) is located in the base region of the separation unit.

4. Device according to Claim 3, characterised in that a plurality of inlet pipes (2) and a plurality of baffle plates (4) are located inside the separation unit (1).

5. Device according to Claims 3 and 4, characterised in that the cross-section of the cylindrical separation unit (1) widens out frustoconically below the suction connection (9).

6. Device according to Claim 5, characterised in that the cross-sectional area at the lower end of the truncated cone amounts to a maximum of 1.5 times the cross-sectional area of the reactor.

7. Device according to Claims 3 to 6, characterised in that the baffle plate (4) comprises a guide ring (5).

8. Device according to Claims 3 to 7, characterised in that the baffle plate (4) is provided with means (16) for splitting the path of the jet, which are offset with respect to each other.

9. Device according to Claims 3 to 8, characterised in that the separation unit (1) is constructed to be closed and contains a compressed air supply (15) and a vent (14).

10. Device according to Claims 3 to 9, characterised in that the lid of the separation unit (1) forms the baffle plate (4).

## Revendications

1. Procédé pour la séparation, le nettoyage et le renvoi ou recyclage en continu d'un matériau porteur, particulaire, flottant à partir de réacteurs à destination du traitement biologique,
caractérisé en ce que
- le courant d'eau provenant du réacteur avec le matériau porteur entraîné (8) est dirigé contre une tôle de chicane (4) logée dans un compartiment à gaz (7) d'une unité de séparation (1),
- et en ce que dans l'unité de séparation (1) le matériau porteur (8) en suspension au-dessous du niveau de l'eau (6) dans l'unité de séparation (1) est extrait au moyen d'un éjecteur (10) et ramené dans le réacteur.

2. Procédé selon la revendication 1,
caractérisé en ce que
- l'unité de séparation (1) est actionnée sous pression
- et en ce que le volume gazeux est maintenu constant par ventilation et aération.

3. Dispositif pour la séparation, le nettoyage et le renvoi en continu de matériau porteur, particulaire, flottant à partir de réacteurs à destination du traitement d'eau biologique
caractérisé en ce que
- l'amenée de l'écoulement en sortie du réacteur aboutit dans une unité de séparation cylindrique (1) et
- est séparée par une fente circulaire (3)
- arrive jusqu'à une tôle de chicane (4) disposée dans l'unité de séparation (1)
- en ce que au-dessous de la tôle de chicane (4) une tubulure d'aspiration (9) aboutit dans un éjecteur (10) muni d'un branchement pour l'eau motrice (11)
- a partir duquel repart une conduite d'acheminement (12) dans le réacteur
- et en ce que dans la zone de fond de l'unité de séparation est ménagée une évacuation (13).

4. Dispositif selon la revendication 3,
caractérisé en ce que
- à l'intérieur de l'unité de séparation (1) sont disposés plusieurs tuyaux d'amenée (2) et plusieurs tôles de chicane (4).

5. Dispositif selon les revendications 3 et 4,
caractérisé en ce que
- la section transversale de l'unité de séparation cylindrique (1) est élargie au-dessous de la tubulure d'aspiration (9) en forme de cône tronqué.

6. Dispositif selon la revendication 5,
caractérisé en ce que
- la surface de section transversale sur l'extrémité inférieure du cône tronqué est égale au maximum à une fois et demie la surface de section transversale du réacteur.

7. Dispositif selon les revendications 3 à 6,
caractérisé en ce que
- la tôle de chicane (4) possède un anneau de guidage (5).

8. Dispositif selon les revendications 3 à 7,
caractérisé en ce que
- la tôle de chicane (4) est munie de brise-jets (16) disposés de façon décalée les uns par rapport aux autres.

9. Dispositif selon les revendications 3 à 8,
caractérisé en ce que
- l'unité de séparation (1) est conçue de façon hermétique et contient une amenée d'air sous pression (15) et une évacuation d'air (14).

10. Dispositif selon les revendications 3 à 9,
caractérisé en ce que
- le couvercle de l'unité de séparation (1) forme la tôle de chicane (4).
